Europäisches Patentamt

European Patent Office

Office européen des brevets

(19)

(11) Publication number: **0 393 476**
A1

(12)

# EUROPEAN PATENT APPLICATION

(21) Application number: **90106811.4**

(51) Int. Cl.5: **B32B 5/28, B29C 67/14**

(22) Date of filing: **10.04.90**

(30) Priority: **21.04.89 IT 6729389**

(43) Date of publication of application:
**24.10.90 Bulletin 90/43**

(84) Designated Contracting States:
**BE DE ES FR GB NL SE**

(71) Applicant: **PIANFEI ENGINEERING S.r.L.**
**Via Cuneo 27**
**I-12080 Pianfei (Cuneo)(IT)**

(72) Inventor: **Gaggero, Attilio**
**Via Mombrisone 74**
**I-12013 Chiusa Pesio (Uneo)(IT)**
Inventor: **Mondino, Lino**
**Via Cueno 38**
**I-12080 Pianfei (Cuneo)(IT)**

(74) Representative: **Alagem Modiano, Lara S. et al**
**c/o Modiano, Josif, Pisanty & Staub Via**
**Meravigli 16**
**I-20123 Milano(IT)**

(54) **Method for manufacturing moldable thermoplastic products, particularly for motor vehicle panels, and products obtained thereby.**

(57) The method comprises forming a continuous sheet prepreg by impregnating an aggregate of glass fibers and thermoplastic binder, then cooling and sectioning the obtained sheet (L),forming a sandwich-like composite section including at least two outer laminate layers (L1, L2) and an intermediate spacer material (SC), preheating the composed section to the melting temperature of the thermoplastic binder, transferring into a mold (22) the composite section, cold-molding and keeping the composite section in the mold until the thermoplastic binder sets.

Fig. 2

EP 0 393 476 A1

## METHOD FOR MANUFACTURING MOLDABLE THERMOPLASTIC PRODUCTS, PARTICULARLY FOR MOTOR VEHICLE PANELS, AND PRODUCTS OBTAINED THEREBY

The present invention relates to a method for manufacturing generic moldable, rigid or semirigid elements, in particular lightweight, self-supporting and sound-deadening products obtainable through said method as will become apparent from the following description.

A typical application of the products obtainable with the method according to the present invention is constituted by covering and outfitting elements for the interior of motor vehicles such as, in particular, self-supporting coverings of the roof panels, door panels, rear window ledges, coverings of the trunk and in general all the covering and/or outfitting elements for which lightness, formability, sound-deadening, thermal insulation and self-supportability, i.e. ability to support their own weight without the use of auxiliary supporting structures, are required.

Lightweight moldable materials, suitable for manufacturing panels and coverings as specified, are already known and in widespread use. Their structure is normally of the sandwich type and comprises two surface layers of glass fiber, briefly termed liners, impregnated with resin, between which a spacing, porous and sound-deadening material, briefly termed spacer is interposed.

In all these known materials, the impregnating resin is of the thermosetting type or is based on polyole-isocyanate.

The material is produced with various methods depending on the resin employed, but generally, in all the currently known methods intended for the production of composed materials as specified, the polymerization or polyaddition reaction occurs in a mold, with the unavoidable consequence of relatively long molding times, of approximately one minute (in the most favorable cases) and with the emission of reaction-gases and/or solvents which pollute the environment if they are not treated with great care.

With said known methods, molding furthermore occurs under heat, in thermostat-controlled molds, and at temperatures comprised between 120 and 200°C. In many cases, during molding, an aesthetic covering layer, intended to remain in view, is also coupled to the product; said layer is generally constituted by fabrics or NWF (non-woven fabric).

Other more valuable but more delicate materials, such as fine velvet, fabric coupled to flexible polyurethane, calendered PVC and PVC-ABS (Polyvinylchloride-acrylonitrile-butadiene-styrene), can be used only in some more favorable cases, when the molding temperature can be contained to 100-120°C.

Said known materials based on thermosetting resins and the related known manufacturing methods have, as already mentioned, considerable disadvantages. Said materials in fact require hot-molding of semiworked elements with rather high temperatures and a relatively long permanence in the mold.

Hot-molding generally requires complicated and expensive systems, with molds which have a sophisticated structure and cannot have an excessive surface extension in order to ensure uniform heating.

Due to the molding temperature, the aesthetic covering applied in the mold during the forming step can furthermore be subject to irreversible damage, for example color drift in the case of fabrics, structural deterioration in the case of calendered plastics, whereas the rather long permanence time within the mold generally does not allow continuous operation, requiring the manufacture of the semi-worked element and its intermediate storage.

For the above known manufacturing methods, the greatest disadvantage arises from the use of highly polluting products such as the components of thermosetting resins and/or the solvents of phenoplasts or isocyanates which, as an effect of spray application and/or of evaporation, disperse in the working environment, requiring the installation of expensive conditioning and fire safety systems on the production lines.

The aim of the present invention is to eliminate the disadvantages of the prior art, in particular to provide a new material which is completely free from thermosetting impregnating agents, can be cold-molded, stored for unlimited time in the form of semiworked element and has marked qualities in terms of lightness, sound-deadening and self-support.

Said material is obtained, according to the present invention, by the method defined in claim 1. In practice, the method comprises forming a continuous layer, by hot-lamination, of an aggregate of glass fibers and a thermoplastic binder, preferably in powder form, cooling the laminate and composing, in a sandwich-like manner, at least two of said laminated layers (liners) with an interposed spacer material, sectioning and preheating the assembly thus composed to the melting temperature of the thermoplastic binder, transferring into a mold the individual composed sections, cold-molding them and keeping them in the mold until the thermoplastic binder sets.

The continuous laminated layer is preferably formed by depositing a glass fiber layer, obtained by cutting joined slubbings (so-called roving), onto a continuous conveyor belt. The delivered unit weight is chosen between 50 and 200 g/sq.m. according to the mechanical features to be obtained for the finished product.

Instead of the layer obtained by roving, it is possible to start from a glass fiber mat of adequate thickness, unrolled continuously from a roller and rested on said conveyor belt.

A thermoplastic binder, preferably in powder form, is added to the glass fiber layer, by continuously sprinking it through a distribution hopper.

The thermoplastic binder is chosen among the following compounds: polyethylene, polypropylene, polyamide, polyester, polycarbonate, thermoplastic copolymers. The particles preferably have a granulometry comprised between 60 and 400 microns, and the amount is variable between 50 and 200 g/sq.m.

Two thin films of thermoplastic material, which enclose the glass fiber in a sandwich-like manner, can also be used instead of the powder.

Lamination is performed continuously, heating the aggregate of glass fiber and powder or film binder to a temperature comprised between 120 and 200°C until the thermoplastic compound melts. The low viscosity reached by said thermoplastic material at the melting temperature ensures complete "soaking" of the glass fibers and therefore their correct covering. The laminated material is then cooled until room temperature is reached or until around 70°C when the thermoplastic compound loses its stickiness.

The final material intended for molding is composed by using two laminate layers and a spacer material interposed in a sandwich-like manner.

The spacer can be constituted by polyurethane in sheet form, with density comprised between 20 and 60 kg/cu.m., or by textile or mineral felt or generic foamed thermoplastic material.

Further characteristics, purposes and advantages will become apparent from the following detailed description of some examples for actuating the inventive method, with reference to the accompanying drawings which are given merely by way of example and in which:

figure 1 is a schematic view of a system for the manufacture of the laminate resulting from the aggregation of the thermoplastic material and of the glass fiber;

figure 2 is a diagram showing composing the sandwich, heating and molding the finished product;

figure 3 is an exploded sectional view of the stratified composition of the element which constitutes the final product.

EXAMPLE I

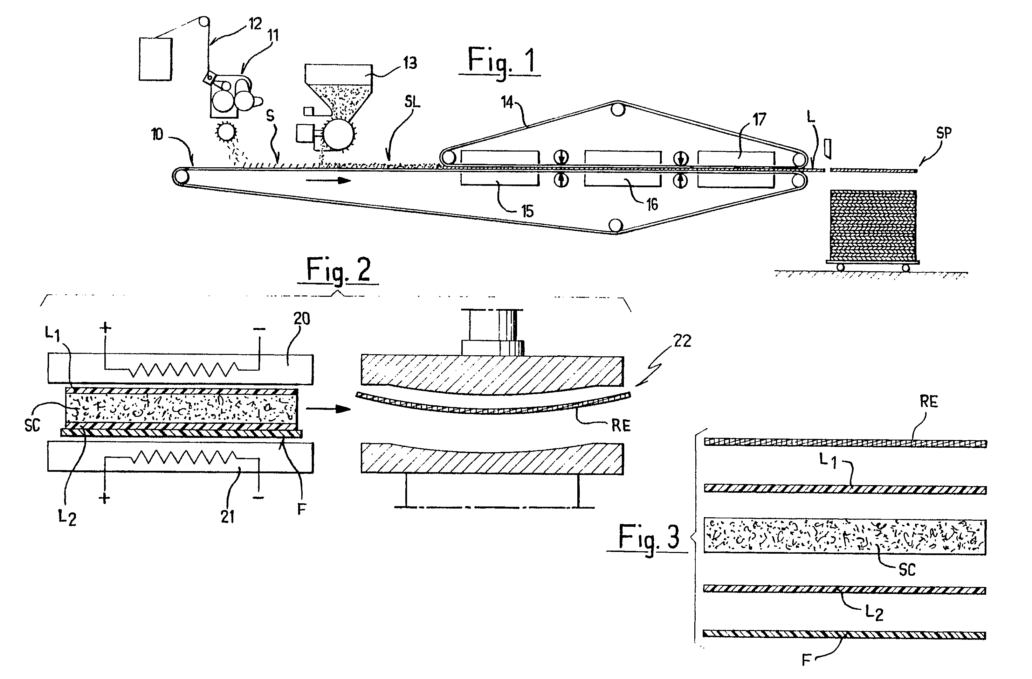

With reference to figure 1, a roving 12 is cut in a known so-called rover 11 and is then deposited onto a continuous conveyor belt 10, forming a layer S of glass fibers. The unit weight of the deposited layer is for example 100 g/sq.m.

Downstream of the device 11, with respect to the motion of the belt 10, a hopper 13 distributes a thermoplastic binder, constituted for example by polyethylene or copolymers and having a granulometry of 250 microns, on the layer of glass fibers deposited by the device 11, and aggregates it thereto. The hopper 13 is adjustable so as to distribute an amount of powder per unit surface which can be varied in any way, and in particular can be even lower than that of the glass fibers. The aggregated layer SL of powdered thermoplastic binder and glass fibers is subsequently hot-laminated, and is subjected, for this purpose, to the action of a presser belt 14 which is heated in the stations 15 and 16 for example in contact with hot plates at the temperature of approximately 180°C at which complete melting of the polyethylene is obtained; by virtue of the low viscosity it has reached and of the action of the presser belt 14, said polyethylene soaks and completely covers the glass fibers of the layer S. After exiting from the station 16 the thus obtained laminated layer L is cooled, for example in a station 17 with water-cooled plates, which brings the material to room temperature or at least to the temperature at which the thermoplastic binder loses its stickiness, for example 70°C in the case of polyethylene.

The thermoplastic laminate L, or liner, is then cut into sections SP and stacked or rolled to be used, after storage for an unlimited time, in the subsequent composition and molding steps. The first of said steps consists in composing a sandwich which includes two outer laminate layers L1-L2 and an intermediate layer of spacer material SC, constituted by a sheet of polyurethane with a thickness comprised between 5 and 20 mm, depending on the mechanical characteristics required of the finished product, and a density comprised between 20 and 50 kg/cu.m.

A laminate layer, for example the layer L2, is covered with a protective material F, constituted for example by a layer of NWF (non-woven fabric). The sandwich thus obtained is preheated between two heating plates 20-21 or by equivalent heating means to a temperature which is 20-25% higher than the softening temperature of the thermoplastic binder, for example to 160°C in the case of polyethylene, and is then transferred into the cold-forming mold 22 in which an aesthetic covering RE has been placed beforehand; said covering is chosen among one of the following materials: velvet, fabric, non-woven fabric, calendered polyvinylchloride (PVC) o acrylonitrile-butadiene-styrene (ABS). The adhesion of said aesthetic covering to the composed material is ensured by the thermoplastic binder itself, and glues or additives of any kind are therefore not necessary.

Molding is performed by keeping the mold closed for a time - generally comprised between 15 and 30 seconds - which is sufficient to ensure setting of the thermoplastic binder by cooling, and the product is extracted and sent to a cutting and perimetric finishing station.

The typical stratified composition of the finished product obtained with the method according to the present invention is illustrated by the exploded sectional view of figure 3 and is characterized by:
- aesthetic covering RE
- first layer L1 (liner) of thermoplastic laminate and glass fibers
- spacer material SC
- second layer L2 of thermoplastic laminate and glass fibers
- possible protective material F.

## EXAMPLE II

One proceeds as in the previous example, replacing the layer S obtained by deposition through roving with a continuous glass fiber mat. The use of the mat allows to eliminate the rover device 11.

## EXAMPLE III

One proceeds as in examples I or II, replacing the thermoplastic binder powder with a pair of thin films of calendered thermoplastic material, between which the glass fibers are deposited or the mat is enclosed. The powder distributing hopper 13 is thus eliminated.

## EXAMPLE IV

One proceeds as in examples I or II or III, using polypropylene or copolymers as the powder or calendered thermoplastic binder. The lamination step occurs at the temperature of 200°C. The preheating temperature for molding is unchanged.

## EXAMPLE V

One proceeds as in examples I or II or III, using a polyester resin or copolymers as the powder or calendered thermoplastic binder. The lamination step occurs at 180°C. The preheating temperature for molding is unchanged.

## EXAMPLE VI

One proceeds as in examples I or II or III, using a polyamide resin or copolymers as the powder or calendered thermoplastic binder. The lamination and preheating temperatures are unchanged.

## EXAMPLE VII

One proceeds as in examples I or II or III, using polycarbonate or copolymers as the thermoplastic binder. The lamination step occurs at 200°C. The preheating step for molding occurs at 200°C.

## EXAMPLE VIII

One proceeds as in any one of examples I to VII, using, in the composition of the sandwich to be used for molding, a spacer chosen among the following materials: textile felt, mineral felt, foamed thermoplastic material. The preheating and molding steps of the method are unchanged.

The details of execution of the method can naturally be varied extensively with respect to what has been described and illustrated by way of non-limitative example without altering the concept of the invention and without thereby abandoning the scope of said invention.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A method for manufacturing molded thermoplastic products, particularly panels of motor vehicles, characterized by the following consecutive steps:
- forming a continuous laminate by hot-laminating an aggregate of glass fibers and thermoplastic binder and then cooling the obtained laminate;
- sectioning the laminate to obtain laminate sections and forming a sandwich-like composite section including at least two outer laminate sections and an intermediate spacer material;

- preheating the composed material to the melting temperature of the thermoplastic binder;

- transferring the composed section into a mold, cold-molding and keeping said composite section in the mold until the thermoplastic binder sets to obtain a molded product;

- extracting and finishing the molded product.

2. A method according to claim 1, wherein in order to form the continuous laminate a glass fiber layer obtained by cutting from rovings is deposited on a continuous conveyor belt, and the thermoplastic binder in powder form delivered by a distribution hopper is added to the glass fiber layer.

3. A method according to claims 1 and 2, wherein the glass fiber layer has a unit weight comprised between 50 and 200 g/sq.m. and the thermoplastic binder has a unit weight which can also be lower than the unit weight of the glass fiber layer.

4. A method according to claims 1, 2 and 3, wherein the thermoplastic binder in powder form has a granulometry comprised between 60 and 400 microns.

5. A method according to claims 1 to 4, wherein the aggregate of glass fibers and thermoplastic binder is laminated at a temperature which is at least equal to the melting temperature of the thermoplastic binder.

6. A method according to claims 1 and 5, wherein the aggregated is laminated with the aid of a presser belt.

7. A method according to claim 1, using a glass fiber mat for forming the continuous laminate.

8. A method according to claims 1 and 2 or 7, wherein the laminate is formed by interposing a glass fiber layer between two calendered sheets of thermoplastic material.

9. A method according to claims 1 to 8, wherein the thermoplastic binder is chosen among the following compounds: polyethylene, polypropylene, polyamide, polyester, polycarbonate and copolymers.

10. A method according to claim 1, wherein the continuous laminate is cooled down at least to the temperature at which the thermoplastic binder loses its stickiness.

11. A method according to claim 1, wherein the spacer material interposed between two laminate sections is chosen between the following products: sheet polyurethane, textile felt, mineral felt, foamed thermoplastic material.

12. A method according to claim 1 and any one of claims 2 to 11, comprising the further step of coupling, inside the mold, an aesthetic covering intended to cover an exposed part of the finished product and a possible protective covering, adhesion of said coverings to the composed section being performed by the thermoplastic material.

13. A method according to claim 12, wherein said aesthetic covering is chosen among the following materials: velvet, non-woven fabric, thermoplastic calendered material.

14. A product resulting from the method according to claims 1 to 13, characterized by a stratified structure comprising:

- a first layer of thermoplastic laminate and glass fibers;

- a second layer of thermoplastic laminate and glass fibers;

- a third layer of spacer material interposed between said first and second layers;

- possible surface aesthetic and/or protective coverings.

Fig. 1

Fig. 2

Fig. 3

EP 0 393 476 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 251 267 (PIANFEI IPA S.p.A.) * Column 4, lines 25-30; column 4, lines 54-57; column 5, lines 1-45; column 5, line 52 - column 6, line 6; claims 1,3-12; figure 2 * | 1-9,11-14 | B 32 B 5/28 B 29 C 67/14 |
| Y | EP-A-0 179 938 (SEKISUI KAGAKU K.K) * Page 2, lines 20-27; page 5, lines 4-23; page 6, lines 10-18; page 7, lines 5-19; page 8, lines 20-32; page 9, lines 18-29; claims 1,6 * | 7-9,11-14 | |
| Y | EP-A-0 235 794 (MONTEDISON S.p.A.) * Column 2, lines 14-33; column 5, lines 16-43; claims 1,2; figure 1 * | 1-6,14 | |
| A | PATENT ABSTRACTS OF JAPAN, vol. 10, no. 44 (M-455)[2101], 21st February 1986; & JP-A-60 196 332 (IKEDA BUTSUSAN K.K.) 04-10-1985 * Whole abstract * | 1,14 | |
| A | DE-A-1 956 038 (FARBENFABRIKEN BAYER AG) * Page 9, lines 6-22; figure 2 * | 8 | TECHNICAL FIELDS SEARCHED (Int. Cl.5) B 29 B B 29 C B 32 B |
| A | WO-A-8 505 593 (DOW CHEMICAL CO.) * Page 6, lines 10-29; page 6, line 30 - page 7, line 22; page 9, lines 8-29; page 10, lines 14-19; page 14, lines 14-19; page 14, line 30 - page 15, line 7; page 18, lines 6-7 * | 1,2,9, 11-14 | |
| A | DE-A-2 146 409 (METALLGESELLSCHAFT AG) * Claims 1-3,10,13,16,25,27 * | 1,2,7,9 ,11-14 | |

The present search report has been drawn up for all claims

| Place of search | Date of completion of the search | Examiner |
|---|---|---|
| THE HAGUE | 18-07-1990 | PHILPOTT G.R. |

EPO FORM 1503 03.82 (P0401)